Europäisches Patentamt

European Patent Office

Office européen des brevets

(11) Veröffentlichungsnummer: **0 454 950 A2**

# EUROPÄISCHE PATENTANMELDUNG

(21) Anmeldenummer: 91101491.8

(51) Int. Cl.5: **B23B 51/00**

(22) Anmeldetag: **05.02.91**

(30) Priorität: **04.05.90 DE 4014224**

(43) Veröffentlichungstag der Anmeldung:
**06.11.91 Patentblatt 91/45**

(84) Benannte Vertragsstaaten:
**AT CH DE FR GB IT LI NL SE**

(71) Anmelder: **fischerwerke Artur Fischer GmbH
& Co. KG
Weinhalde 14 - 18
W-7244 Waldachtal 3/Tumlingen(DE)**

(72) Erfinder: **Fischer, Artur, Prof.dr.h.c.
Weinhalde 34
W-7244 Waldachtal 3/Tumlingen(DE)**

(54) Vorrichtung zur Herstellung von Bohrlöchern mit Hinterschneidung.

(57)
2.1 In hochfesten, insbesondere armierten Betonteilen werden die Bohrlöcher mit einem Diamant-Bohrwerkzeug erstellt, das für die Kühl- und Spülflüssigkeit eine axiale Durchgangsbohrung aufweist. Nach der Erstellung des zylindrischen Bohrloches wird mit einem separaten Ausreibgerät in der Bohrlochtiefe eine Hinterschneidung ausgerieben.

2.2 Um in einem Arbeitsgang mit demselben Diamant-Bohrwerkzeug Bohrlöcher mit Hinterschneidung herstellen zu können, ist der Schaft des Bohrwerkzeuges mit einem Anschlagbund und einer sich zum Bohrkopf und Anschlagbund hin verjüngenden Querschnittserweiterung versehen, an deren Außenfläche längsverlaufende Nuten angeordnet sind.

Fig.1

EP 0 454 950 A2

Die Erfindung betrifft eine Vorrichtung zur Herstellung von Bohrlöchern mit Hinterschneidung gemäß der Gattung des Hauptanspruches.

Zur Herstellung einer Hinterschneidung in einem Bohrloch kann ein Bohrer mit einem Hartmetall-Bohrplättchen verwendet werden, das seitlich am Bohrkopf überstehende Seitenschneiden aufweist. Die Hinterschneidung wird dabei so hergestellt, daß nach der Erstellung des zylindrischen Teils des Bohrloches das Bohrwerkzeug verschwenkt und in dieser Lage eine oder mehrere Rührbewegungen mit der Bohrmaschine ausgeführt werden. Dabei reibt der Bohrkopf im Bereich des Bohrlochgrundes eine Hinterschneidung aus, in die ein Spreizdübel mit einer aufspreizbaren Spreizhülse formschlüssig einsetzbar ist. Um die Schwenkbewegung des Bohrwerkzeuges zu ermöglichen, ist es bekannt, solche Bohrwerkzeuge mit einem festen Anschlagbund zu versehen, der sich in einer Mulde einer an der Betonoberfläche aufsitzenden Anschlagplatte zur Bildung eines Schwenklagers abstützt. In hochfestem und insbesondere armiertem Beton sind wegen der hohen Abnutzungsrate und Bruchgefahr Bohrwerkzeuge mit Hartmetallplättchen für die Erstellung von Bohrlöchern wenig geeignet. Es ist daher üblich, in solchen Baustoffen Diamant-Bohrer zu verwenden. Das Erstellen von Bohrlöchern mit Hinterschneidungen erfolgt dann in zwei Phasen. In der ersten Phase wird mit einem Diamant-Kronenbohrer das zylindrische Bohrloch erstellt und der stehengebliebene Bohrkern ausgebrochen. Danach wird mit einem Ausreibgerät die Hinterschneidung ausgeführt. Da der Kern nicht immer in der erreichten Bohrlochtiefe abbricht, wird die Hinterschneidung zur Vermeidung der Beschädigung des Ausreibgerätes in einem Abstand zur Bohrlochtiefe angebracht. Neben zwei Arbeitsgängen für die Erstellung des Bohrloches mit Hinterschneidung sind stets auch tiefere zylindrische Bohrlöcher erforderlich, als es ansich für die Verankerung des Befestigungselementes erforderlich wäre.

Der Erfindung liegt daher die Aufgabe zugrunde, eine Vorrichtung zu schaffen, mit der in einem Arbeitsgang und unter Verwendung von Diamant-Bohrwerkzeugen die Herstellung von Bohrlöchern mit Hinterschneidung möglich ist.

Die Lösung dieser Aufgabe wird durch die im Hauptanspruch angegebenen Merkmale erreicht. Über die Anschlußöffnung an der Muffe wird Wasser als Kühl- und Spülflüssigkeit durch die axiale Durchgangsbohrung des Bohrwerkzeuges zur Bohrerspitze geleitet und über die an der Querschnittserweiterung angeordneten Kerben wieder aus dem Bohrloch abgeführt. Durch die kontinuierliche Wasserzuführung wird das Diamant-Bohrwerkzeug gekühlt und gleichzeitig das Bohrmehl aus dem Bohrloch ausgespült.

Nach Erstellung des zylindrischen Teils des Bohrloches und Erreichen der vorgegebenen Bohrlochtiefe kommt der am Bohrwerkzeug angeordnete Anschlagbund zur Anlage an der Außenfläche des Betonteiles. In dieser Position wird das Bohrwerkzeug mit der Bohrmaschine verschwenkt und ein oder mehrere Rührbewegungen ausgeführt. Die am Bohrschaft angeordnete Querschnittserweiterung bildet dabei in Verbindung mit der Bohrlochwandung das Schwenklager. Die erforderliche Hinterschneidung ist dann erreicht, wenn die beidseitig von der Querschnittserweiterung ausgehende Verjüngung an der Bohrlochwandung zur Anlage kommt. Bereits bei der Erstellung des zylindrischen Teils des Bohrloches dient die Querschnittserweiterung auch zur Führung des Bohrwerkzeuges, so daß mit handelsüblichen Handbohrmaschinen ohne Arretiereinrichtungen gearbeitet werden kann.

Bei wendelförmiger Anordnung der Nuten unterstützt die Rotation des Bohrwerkzeuges die Ausspülung des Bohrmehls aus dem Bohrloch.

Um einerseits ein Ausbrechen der Bohrlochmündung beim Ausschwenken zu vermeiden und andererseits die Vorrichtung noch verschleißfester zu gestalten, kann über den Anschlagbund eine axial fixierte Kunststoffglocke gestülpt sein.

Zur Erstellung einer V-förmigen Hinterschneidung in Anpassung an die V-förmige Aufspreizung des in das Bohrloch einzusetzenden Befestigungselementes kann der Bohrkopf eine sich zu seiner Stirnseite hin konisch erweiternde Form aufweisen.

Ein einfacher Aufbau der Vorrichtung wird dadurch erreicht, daß die Muffe zwischen jeweils einem an der Bohreraufnahme und einem am Bohrschaft ausgebildeten Flansch gelagert ist, sowie das Bohrwerkzeug an seinem dem Bohrkopf gegenüberliegenden Ende einen Gewindeabschnitt aufweist, der in ein entsprechendes Innengewinde der Bohreraufnahme eingeschraubt ist.

Die Erfindung wird nachfolgend anhand der Zeichnung näher erläutert.

Es zeigen:

Figur 1    die erfindungsgemäße Bohrvorrichtung und

Figur 2    das Bohrwerkzeug im Teilschnitt.

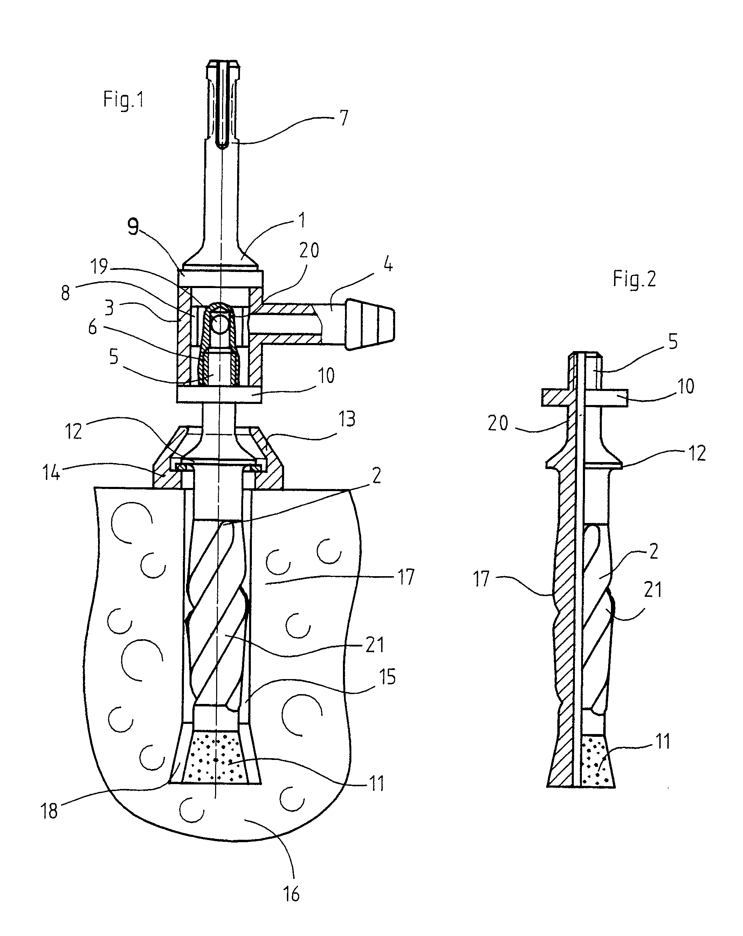

Die in Figur 1 dargestellte Vorrichtung besteht aus einer Bohreraufnahme 1, einem Bohrwerkzeug 2 und einer auf der Bohreraufnahme 1 angeordneter Muffe 3, die mit einem Anschlußstutzen 4 für die Zuführung von Kühl- und Spülflüssigkeit ausgestattet ist. Das Bohrwerkzeug 2 weist einen Gewindeabschnitt 5 auf, mit dem es in ein entsprechendes Innengewinde 6 der Bohreraufnahme eingeschraubt ist. Die Bohreraufnahme 1 ist ferner mit einem Befestigungsschaft 7 versehen, mit dem die Aufnahme in ein Bohrfutter einer Bohrmaschine einspannbar ist. Weiterhin besitzt die Bohreraufnahme 1 eine umlaufende Nut 8, über die die Muffe 3 gestülpt und zwischen der Schulter 9 der Bohreraufnahme 1 und dem Flansch 10 des Bohrwerkzeuges 2 gelagert ist.

Das in der Bohreraufnahme 1 eingeschraubte Bohrwerkzeug 2 weist an seinem vorderen Ende einen Bohrkopf 11 auf, der eine sich zu seiner Stirnseite hin konisch erweiternde Form besitzt und mit Diamantsplitter bestückt ist. Im hinteren Bereich ist das Bohrwerkzeug 2 mit einem Anschlagbund 12 ausgestattet, über den zusätzlich eine Kunststoffglocke 13 gestülpt ist. Diese Kunststoffglocke stützt sich über eine Scheibe 14 an dem Anschlagbund 12 ab und bildet damit einen Anschlag zur Begrenzung der Bohrlochtiefe.

Zur Erstellung des zylindrischen Teils des Bohrloches 15 in dem Betonteil 16 ist auch die Stirnseite des Bohrkopfes 11 mit Diamantsplitter bestückt. Nach Erreichen der durch die Kunststoffglocke 13 begrenzten Bohrlochtiefe wird die Vorrichtung mit der Bohrmaschine ausgeschwenkt und dabei ein oder mehrere Rührbewegungen mit der Bohrmaschine ausgeführt. Um das Ausschwenken zu ermöglichen, bildet die Querschnittserweiterung 17 des Bohrschaftes mit der Bohrlochwandung ein Schwenklager. Durch die von der Querschnittserweiterung 17 ausgehende gleichmäßige Verjüngung zum Bohrkopf 11 und Anschlagbund 12 hin wird eine Begrenzung des Schwenkwinkels erreicht, die eine exakte, bei allen Bohrlöchern gleiche Ausreibung der Hinterschneidung 18 ermöglicht.

Sowohl für den Bohr- als auch für den Ausreibvorgang der Hinterschneidung wird über den Anschlußstutzen 4 der Muffe 3 Wasser zur Kühlung des Bohrkopfes und zum Ausspülen des Bohrmehles zugeführt. Über die Querbohrung 19 der Bohreraufnahme 1 und der in der Querbohrung 19 mündenden Durchgangsbohrung 20 des Bohrwerkzeuges und der Bohreraufnahme gelangt das Wasser zum Bohrkopf 11 und Bohrlochgrund. Die Abführung des Wassers aus dem Bohrloch 15 wird durch die wendelförmig am Bohrschaft angeordneten Nuten 21 erreicht.

## Patentansprüche

1. Vorrichtung zur Herstellung von Bohrlöchern mit Hinterschneidung, bestehend aus einer Bohreraufnahme, an der eine verdrehbare Muffe mit einer Anschlußöffnung für die Zuführung von Kühl- und Spülflüssigkeit angeordnet ist und einem in der Bohreraufnahme gehaltenen Bohrwerkzeug mit einem mit Diamantsplitter bestückten Bohrkopf und einer axialen, in der Muffe mündenden Durchgangsbohrung, **dadurch gekennzeichnet,** daß der Schaff des Bohrwerkzeuges (2) mit einem Anschlagbund (12) und einer sich zum Bohrkopf (11) und Anschlagbund (12) hin verjüngenden, etwa dem Bohrkopfdurchmesser entsprechenden Querschnittserweiterung (17) versehen ist, an deren Außenfläche längsverlaufende Nuten (21) angeordnet sind.

2. Vorrichtung nach Anspruch 1, **dadurch gekennzeichnet,** daß die Nuten (21) wendelförmig angeordnet sind.

3. Vorrichtung nach Anspruch 1, **dadurch gekennzeichnet,** daß über den Anschlagbund (12) eine axial fixierte Kunststoffglocke (13) gestülpt ist.

4. Vorrichtung nach Anspruch 1, **dadurch gekennzeichnet**, daß der Bohrkopf (11) eine sich zu seiner Stirnseite hin konisch erweiternde Form aufweist.

5. Vorrichtung nach Anspruch 1, **dadurch gekennzeichnet,** daß die Muffe (3) zwischen jeweils einem an der Bohreraufnahme (1) und einem am Bohrschaft ausgebildeten Flansch (9, 10) gelagert ist.

6. Vorrichtung nach Anspruch 1, **dadurch gekennzeichnet,** daß das Bohrwerkzeug (2) an seinem dem Bohrkopf (11) gegenüberliegenden Ende einen Gewindeabschnitt (5) aufweist, der in ein entsprechendes Innengewinde (6) der Bohreraufnahme (1) eingeschraubt ist.

Fig.1

Fig.2